# EUROPÄISCHE PATENTANMELDUNG

(11) **EP 2 159 507 A2**
(43) Veröffentlichungstag der Anmeldung: **03.03.2010**
(21) Anmeldenummer: 09168819.2
(22) Anmeldetag: 27.08.2009
(51) Int. Cl.: F24J 2/22, F24J 2/24, F24J 2/46

(54) **Solarkollektor und Absorber mit verbesserter Fluidverteilung**

(30) Priorität: 02.09.2008 DE 102008045451
(71) Anmelder: Robert Bosch GmbH, 70442 Stuttgart (DE)
(72) Erfinder: Boedeker, Hendrik, 71229, Leonberg/Hoefingen (DE); Clement, Uwe, 73114, Schlat (DE)

(57) **Zusammenfassung**

Die Erfindung betrifft eine Absorbereinrichtung (1) für einen Solarkollektor, umfassend ein von dem Solarfluid durchströmbares Fluidverteilungssystem sowie einen Solarkollektor, insbesondere einen vollflächig durchströmbaren Solarkollektor, mit einer Absorbereinrichtung (1).

Es ist eine Aufgabe der Erfindung, eine Absorbereinrichtung (1) und einen Solarkollektor mit einer Absorbereinrichtung (1) zu schaffen, die einfache Mittel zur optimalen Fluidverteilung eines Solarfluids in der Absorbereinrichtung (1) realisieren, wobei die Mittel insbesondere einfach ausgebildet sind.

Gekennzeichnet sind die Absorbereinrichtung (1) und der Solarkollektor dadurch, dass das das Fluidverteilungssystem eine als Strömungsfeld ausgebildete Kanalstruktur (6) mit strömungstechnischen Mitteln (2,5) zur Fluidhomogenisierung aufweist, sodass im Wesentlichen unabhängig von einem Eingangsfluidstrom eine gleichmäßige Verteilung des Fluidstroms in dem Solarkollektor gewährleistet ist.

## Beschreibung

Die Erfindung betrifft eine Absorbereinrichtung für einen Solarkollektor nach dem Oberbegriff des Patentanspruches 1. Weiter betrifft die Erfindung einen Solarkollektor, insbesondere einen vollflächig durchströmbaren Solarkollektor nach dem Oberbegriff des Patentanspruchs 10.

Absorber für Solarkollektoren und Solarkollektoren sind aus dem Stand der Technik allgemein bekannt. Derartige Solarkollektoren zur Gewinnung thermischer Energie verwenden heutzutage Kupfer als Grundmaterial für den Absorber. Die hohe Wärmeleitfähigkeit des Kupfer-Metalls bedingt deshalb den Grundaufbau des Kollektors. Dabei ist die Kollektorfläche mit selektiv beschichtetem Kupferblech überspannt, welches eine einfallende Solarstrahlung absorbiert. Die aus der Solarstrahlung aufgenommene Wärme wird auf mit Solarfluid durchströmte Kupferrohre übertragen, die mit dem Kupferblech in direktem Kontakt stehen. Da eine Wärmeübertragung durch das Blech selbst bei Distanzen von über 10 cm effizient funktioniert, ist die rohrbedeckte Fläche im Vergleich zur gesamten Kollektorfläche eher klein. Gemäß einem Layout der Rohrleitungen auf der Absorberfläche kann der Absorbertyp klassifiziert werden, typische Beispiele sind der Harfenabsorber und der Doppelmäanderabsorber. Um den Aufwand für die Herstellung von Kollektoren zu reduzieren, wurde im Stand der Technik vorgeschlagen, Kunststoff statt Kupfer als Absorbermaterial zu verwenden. Die Wärmeleitfähigkeit von Kunststoff ist allerdings typischerweise um einen Faktor 1000 kleiner als die von Kupfer. Aus diesem Grund muss das Aufbauprinzip eines Kunststoffabsorbers gegenüber bekannten Kupferabsorbern modifiziert werden. Da die Wärmeleitung bei Kunststoffabsorbern nur über wenige Millimeter effizient funktioniert, muss der Kollektor möglichst vollflächig durchströmt werden.

Sowohl bei Absorbern aus Kupfer als auch aus Kunststoff ist es wichtig, dass der Kollektor bzw. die Rohre gleichmäßig mit Solarfluid durchströmt werden. Um dies zu realisieren, gibt es im Stand der Technik für den Kupferkollektor mehrere Lösungskonzepte. Auf der einen Seite kann in einem Harfenabsorber ein Versorgungsrohr mit großem Puffervolumen verwendet werden. Auch wurde im Stand der Technik vorgeschlagen, eine verästelte, hydraulisch abgeglichene Rohrstruktur über den Absorber zu legen. Gegebenenfalls können alle Rohre von einem zentralen Versorgungspunkt starten. Die Tatsache, dass die von den Rohren bedeckte Fläche klein ist und auch ungleichmäßige Abstände der Rohre erlaubt sind, macht die Auslegung des Rohrsystems im Kupferfall einfacher. Für den Kunststoff treten zusätzliche Probleme auf. Die Zahl der zu versorgenden Kanäle ist um mehr als eine Größenordnung höher als im Kupfer. Zudem darf der Durchmesser von aus Kunststoff geformten Puffervolumen in Absorbern nicht zu groß sein, da unter Druck stehendes Solarfluid sonst möglicherweise besonders die obere Abdeckplatte stark verformen kann.

Ein weiterer Ansatz im Stand der Technik besteht darin, ein Tichelmann-Rohrsystem wie bei einem Heizkörper zu verwenden. Hier werden Lauflängen und Einlassöffnungen so angepasst, dass die Rohrwiderstände in allen Kanälen gleich groß sind. Dies scheint prinzipiell eine gute Idee, führt jedoch in der Praxis zu Problemen. Dies liegt darin, dass die Strömungsgeschwindigkeiten in den Kanälen so groß sind, dass typische Reynoldszahlen um 100 erreicht werden. Eine theoretische Überlegung zeigt, dass sich unter diesen Bedingungen die Verluste in den einzelnen Rohren aus Anteilen zusammensetzen, die sowohl linear als auch in höherer Ordnung im Massenfluss sind. Dies bedeutet, dass das Verhältnis zweier Kanalwiderstände eine Funktion des Massenflusses wird. Nur im Grenzfall verschwindender Reynoldszahlen, dem sogenannten Stokes-Fall dominieren allein die linearen Anteile.

Bei den bekannten Lösungen treten bei der Fluidverteilung auf Kanalabschnitte stets Nachteile auf. Bei Einsatz eines Diffusors ist darauf zu achten, dass dieser einen maximalen Öffnungswinkel nicht überschreitet. Aufgrund dieser Anforderung wird ein Einströmsystem mit Diffusor extrem lang. Verwendet man eine poröse Schicht, so besteht insbesondere bei inhärenten hohen Druckverlusten auch die Gefahr einer Verstopfung der Poren.

Nachteilig an den bekannten Absorbern ist zusammengefasst, dass eine geeignete Fluidverteilung zur effizienten Arbeitsweise nicht realisierbar ist, insbesondere nicht für Kunststoffabsorber. Dieses ist insbesondere nicht mit einem einfachen Aufbau realisierbar.

Der Erfindung liegt die Aufgabe zugrunde, einen Absorber und einen Solarkollektor mit einem Absorber zu schaffen, der mit einfachen Mitteln eine optimale Fluidverteilung eines Solarfluids in einem Absorber realisiert.

Erfindungsgemäß wird dies durch die Gegenstände mit den Merkmalen des Patentanspruches 1 und des Patentanspruchs 10 gelöst. Vorteilhafte Weiterbildungen sind den Unteransprüchen zu entnehmen.

Die erfindungsgemäße Absorbereinrichtung für einen Solarkollektor, umfassend ein von dem Solarfluid durchströmbares Fluidverteilungssystem, ist **dadurch gekennzeichnet, dass** das Fluidverteilungssystem eine als Strömungsfeld ausgebildete Kanalstruktur mit strömungstechnischen Mitteln zur Fluidhomogenisierung aufweist, sodass im Wesentlichen unabhängig von einem Eingangsfluidstrom eine gleichmäßige Verteilung des Fluidstroms in dem Solarkollektor gewährleistet ist. Das Strömungsfeld ist insbesondere mittels Schäumverfahren oder dergleichen einfach herstellbar.

In einer Ausführungsform der vorliegenden Erfindung ist vorgesehen, dass die Kanalstruktur eine Kaskadenstruktur aufweist, bei dem die strömungstechnischen Mittel als von einem Eingangskanalabschnitt abzweigende Kanalverzweigungen mit mehreren Ausgangskanalabschnitten ausgebildet sind. Im Strömungsfluss, der von dem Eingangskanalabschnitt ausgeht, findet somit für jede Kanalverzweigung eine Richtungsablenkung statt, sodass nicht nur ein Ausgangskanalabschnitt eine Richtungsablenkung erfährt, sondern alle abgehenden Ausgangskanalabschnitte.

In noch einer weiteren Ausführungsform der vorliegenden Erfindung ist vorgesehen, dass jede Kanalverzweigung zwei Ausgangskanalabschnitte aufweist. Auf diese Weise lassen sich in einer ersten Stufe aus einem Kanalabschnitt zwei Kanalabschnitte für eine nächste Stufe realisieren. Da diese zwei Kanalabschnitte für die zweite Stufe die Eingangskanalabschnitte bilden, lassen sich in einer weiteren Stufe vier Ausgangskanalabschnitte realisieren. Die Anzahl der Kanalabschnitte pro Stufe lässt sich also gemäß einer Zweierpotenz bestimmen und festlegen.

Bei einer weiteren Ausführungsform der vorliegenden Erfindung ist vorgesehen, dass in der Kanalstruktur mehrere strömungstechnische Mittel ausgebildet sind, wobei die Ausgangskanalabschnitte die Eingangskanalabschnitte für ein nachfolgendes strömungstechnisches Mittel bilden, sodass eine mehrfache, insbesondere kaskadenartige Kanalverzweigung ausgebildet ist.

Noch eine andere Ausführungsform der vorliegenden Erfindung sieht vor, dass ein Strömungsquerschnitt der Kanalabschnitte stromabwärts abnimmt, wobei vorzugsweise ein Gesamtströmungsquerschnitt im Wesentlichen konstant bleibt. Der Gesamtströmungsquerschnitt entspricht der Summe aller einzelnen Strömungsquerschnitte. Vorzugsweise ist dabei die Summe aller einzelnen Strömungsquerschnitte konstant.

Ein Ausführungsbeispiel der vorliegenden Erfindung sieht vor, dass die Kanalabschnitte eines strömungstechnischen Mittels mit benachbarten Kanalabschnitten eines anderen strömungstechnischen Mittels verbunden sind, sodass ein Druckausgleich zwischen den entsprechenden Kanalabschnitten realisierbar ist.

Ein weiteres Ausführungsbeispiel der vorliegenden Erfindung sieht vor, dass die strömungstechnischen Mittel zur Ausbildung von Kanalabschnitten Leitelemente wie Kanalwandungen, Leitflächen und dergleichen umfassen, mit denen das durchströmbare Solarfluid leitbar ist.

Noch ein weiteres Ausführungsbeispiel der vorliegenden Erfindung sieht vor, dass die strömungstechnischen Mittel zur Ausbildung von Kanalabschnitten Umströmungselemente wie Säulen, Zapfen, Tropfen, Noppen, Erhebungen, Vertiefungen und dergleichen umfassen, die von dem Solarfluid umströmbar sind.

Noch ein anderes Ausführungsbeispiel der vorliegenden Erfindung sieht vor, dass die Kanalabschnitte mittels zwei parallel beabstandeten Plattenelementen und dazwischen angeordneten, zumindest eines der Plattenelemente kontaktierenden, strömungstechnischen Mitteln ausgebildet ist. Vorzugsweise wird die erfindungsgemäße Absorbereinrichtung als Kunststoffabsorbereinrichtung ausgebildet.

Der erfindungsgemäße Solarkollektor, insbesondere ein vollflächig durchströmbarer Solarkollektor, mit einer Absorbereinrichtung, ist **dadurch gekennzeichnet, dass** die Absorbereinrichtung als eine erfindungsgemäße Absorbereinrichtung ausgebildet ist.

Mit dem erfindungsgemäßen Absorber und dem erfindungsgemäßen Solarkollektor wird insbesondere der Vorteil realisiert, dass mit dem erfindungsgemäßen Fluidverteilungssystem in einem weiten Bereich von Gesamtmassenströmen operiert werden kann, wobei gleichzeitig immer eine gleichmäßige Verteilung des Fluidstroms realisierbar ist. Außerdem ist es mit dem erfindungsgemäßen Kanallayout möglich, das Solarfluid unabhängig vom Eingangsmassenstrom des Solarfluids gleichmäßig auf viele Kanäle oder eine ganze Fläche zu verteilen. Zusätzlich zeichnet sich der Absorber durch geringe Druckverluste, geringen Raumbedarf und hohe mechanische Stabilität aus. Vorteilhaft ist weiterhin, dass sich das Konzept durch im Kunststoffbereich häufig verwendete Produktionstechniken wie zum Beispiel das Schäumen, einfach umsetzen lässt.

Um eine gleichmäßige Fluidverteilung im Kollektor sicherzustellen, sind vorliegend zwei Basiskonzepte aufgeführt. Das erste Konzept, welches als pyramidales Kaskadenkonzept bezeichnet werden kann, basiert auf dem Prinzip, eine laminare Strömung in einem langen, in Flussrichtung symmetrischen Kanal in zwei Teilströmungen aufzuteilen. Dies kann durch eine beliebige Verzweigung geschehen, welche ebenfalls die Kanalsymmetrie aufweist. Iteriert man den Teilungsprozess für die Teilströme n-Mal, so erhält man 2ⁿ Teilströme, die alle den gleichen Massenfluss aufweisen. Realisiert man im Kollektor eine Kanalanzahl von 2ⁿ, so kann je einer der Kanäle durch eine Zuleitung versorgt werden.

In weiteren Optimierungsschritten ist es möglich, die Länge der Kaskade weiter zu reduzieren. Zur Verringerung des Materialbedarfs können auch Wandbereiche ausgespart werden. Die entstehenden Hohlräume können helfen, den Strömungsfluss zu homogenisieren. Ungewollte Lufteinschlüsse lassen sich beispielsweise das Einfügen sehr feiner Verbindungskanäle durch die Trennwände schaffen, wobei diese den Hauptfluidfluss nicht stören.

Alternativ zum Kaskadenkonzept kann das sogenannte Konzept pseudoporöser Schichten verwendet werden. Poröse Schichten sind auf der einen Seite in der Lage, einen sie durchdringenden Fluss zu homogenisieren, auf der anderen Seite bewirken sie einen sehr hohen Druckverlust. Zudem besteht möglicherweise die Gefahr der Verstopfung der Schicht. Zur Vermeidung derartige Nachteile unter Beibehaltung der Funktionalität wird deshalb die poröse Schicht durch makroskopische Hindernisse gebildet. Diese können beispielsweise Säulen, Zapfen Tropfen oder Noppen zwischen Abdeck- und Bodenplatte darstellen. Verbindet ein Hindernis wie eine Säule die beiden Platten, wird dadurch die mechanische Stabilität des Kollektors erhöht. Auch die eigentlichen Kanäle können durch eine hexagonale Struktur aus Verbindungselementen ersetzt werden. Strukturmechanikrechnungen zeigen, dass dies bei verringertem Materialeinsatz gegenüber der Kanalgeometrie gleiche oder erhöhte Stabilität liefert. Es lässt sich aus den beiden Konzepten auch eine Kombination realisieren, beispielsweise eine Hybridstruktur aus Kaskade und pseudoporöser Schicht.

Die Festlegung des Konzepts und die anschließende Auslegung der Geometrie hängen stark an den Systemparametern des Kollektors und der gewählten Produktionstechnik. Sind feine Strukturen mit der angewandten Produktionstechnik realisierbar, bietet sich das pseudoporöse Konzept an. Das Kaskadenkonzept kann auch dann angewendet werden, wenn nur groß-skalige Strukturen realisiert werden können.

Die Zeichnungen stellen Ausführungsbeispiele der Erfindung dar. Es zeigt, jeweils schematisch:
- Fig. 1: in einer Perspektivansicht einen Ausschnitt einer Absorbereinrichtung mit aus Leitelementen gebildeten Kanalabschnitten,
- Fig. 2: in einer Perspektivansicht einen Ausschnitt einer Absorbereinrichtung mit aus Umströmungselementen gebildeten Kanalabschnitten,
- Fig. 3: in einer Draufsicht eine als Strömungsfeld ausgebildete Kanalstruktur,
- Fig. 4: in einer Draufsicht ein zweites Ausführungsbeispiel einer als Strömungsfeld ausgebildeten Kanalstruktur,
- Fig. 5: in einer Draufsicht einen Ausschnitt einer Kanalstruktur mit einem durchströmenden Solarfluid,
- Fig. 6: in einer Draufsicht einen Ausschnitt einer zweiten Ausführungsform einer Kanalstruktur mit einem durchströmenden Solarfluid und
- Fig. 7: in einer Draufsicht ein weiteres Ausführungsbeispiel einer Kanalstruktur.

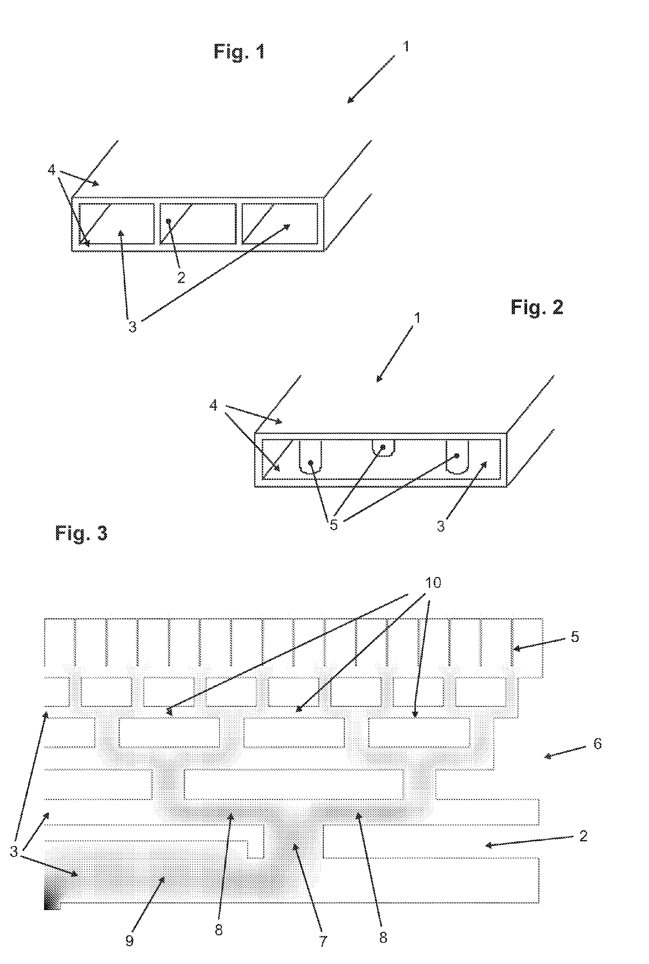

Figur 1 zeigt schematisch in einer Perspektivansicht einen Ausschnitt einer Absorbereinrichtung 1 mit aus Leitelementen 2 gebildeten Kanalabschnitten 3. Die Leitelemente 2 sind vorliegend als Kanalwandung ausgebildet, welche zwischen zwei parallel beabstandeten Platten elementen 4 angeordnet sind. Vorliegend sind die Kanalabschnitte 2, von denen hier drei Kanalabschnitte 2 dargestellt sind, etwa quaderförmig ausgebildet.

Figur 2 zeigt schematisch in einer Perspektivansicht einen Ausschnitt einer Absorbereinrichtung 1 mit aus Umströmungselementen 5 gebildeten Kanalabschnitten 3. Die Umströmungselemente 5 sind vorliegend als zylindrische Säulen ausgebildet, welche zwischen zwei parallel beabstandeten Plattenelementen 4 angeordnet sind. Die Kanalabschnitte 2 haben in der dargestellten Ausführungsform nach Figur 2 keine durchgehende Begrenzung wie in Figur 1, sondern werden durch die Umströmungselemente 5 definiert.

Figur 3 zeigt schematisch in einer Draufsicht eine als Strömungsfeld ausgebildete Kanalstruktur 6. Die Kanalstruktur 6 besteht aus mehreren Kanalabschnitten 3. Die Kanalabschnitte 3 weisen jeweils einen Eingangskanalabschnitt 7 und vorliegend damit fluidisch verbunden jeweils zwei davon verzweigende Ausgangskanalabschnitte 8. In Figur 3 sind die Kanalabschnitte 3 kaskadenartig pyramidenförmig angeordnet, sodass die Ausgangskanalabschnitte 8 einen Eingangskanalabschnitt 7 für eine nachgeschaltete Stufe eines Kanalabschnittes 3 bildet. In dem vorliegenden Ausführungsbeispiel beträgt die Anzahl der Verzweigungen von jedem Eingangskanalabschnitt 7 zwei. Dabei erfahren die beiden verzweigenden Ausgangskanalabschnitte 8 eine Richtungsumkehr zu der Strömungsrichtung des Eingangskanalabschnitts 7, vorliegend etwa um 90°. Die Kanalabschnitte 3 werden vorliegend durch Leitelemente 2 gebildet, entlang denen eine Solarfluidströmung 9, die leicht schraffiert dargestellt ist, geführt wird. Mit abnehmender Größe der Leitelemente 2 werden diese nach und nach zu Umströmungselementen 5, sodass hier eine fluide Kanalstruktur 6, sowohl mit Leitelementen 2 als auch mit Umströmungselementen 5, ausgebildet ist. Die Kanalabschnitte 3 einer Stufe sind untereinander mit Querverbindungskanalabschnitten 10 verbunden, so dass hier ein Druckausgleich zwischen den einzelnen Kanalabschnitten 3 stattfinden kann.

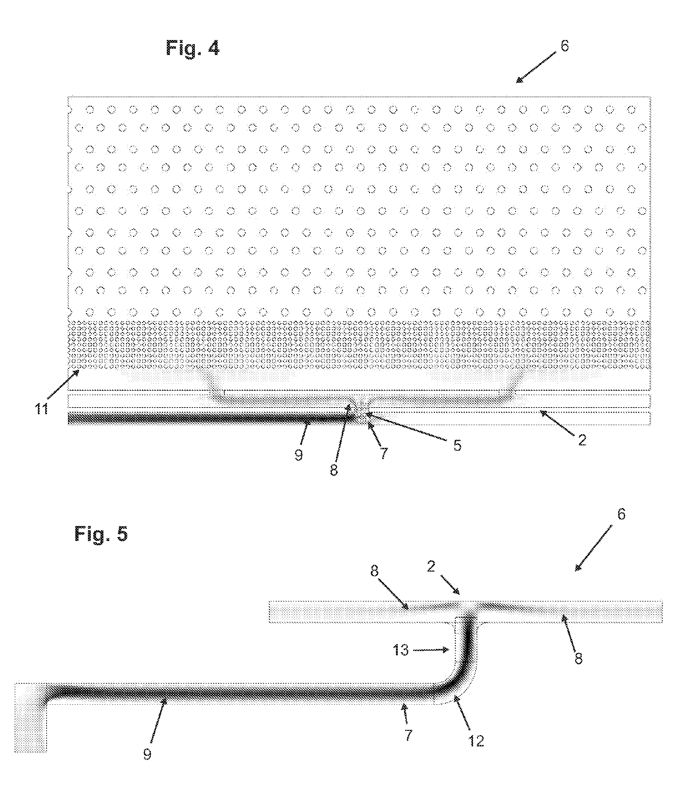

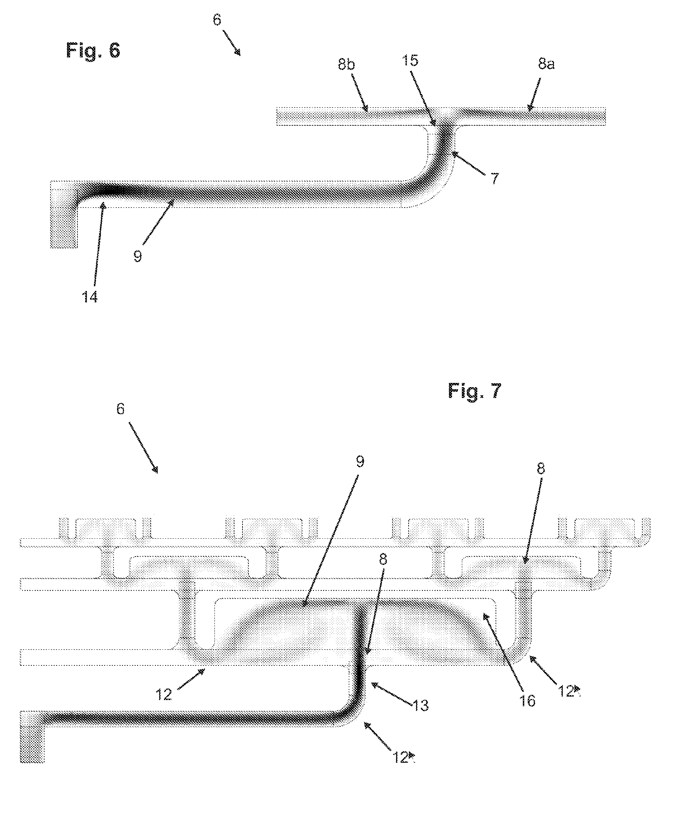

Figur 4 zeigt schematisch in einer Draufsicht ein zweites Ausführungsbeispiel einer als Strömungsfeld ausgebildeten Kanalstruktur 6. Im Wesentlichen ist die Kanalstruktur 6 gleich ausgebildet wie die Kanalstruktur 6 nach Figur 3, mit dem Unterschied, dass der Anteil an Umströmungselementen 5 erhöht ist und in einer früheren Stufe die Umströmungselemente 5 ausgebildet sind. In dem Ausführungsbeispiel nach Figur 4 wird ein strömendes Solarfluid 9 an einer Verzweigung von Eingangskanalabschnitt 7 und den davon abzweigenden Ausgangskanalabschnitten 8 bereits mit Umströmungselementen 5 verzweigt. In nachgeschalteten Stufen erhöht sich die Anzahl der Umströmungselemente 5, sodass eine Art quasi poröse Wand 11 gebildet ist. In Strömungsrichtung hinter dieser porösen Wand 11 ist ein Bereich der Kanalstruktur 6 mit einer symmetrischen Verteilung von Umströmungselementen 5 ausgebildet, welche eine weitere Homogenisierung des Solarfluids bewirken. Der Einfluss von strömungstechnischen Mitteln, wie den Leitelementen 2 oder den Umströmungselementen 5, ist in den Figuren 5 und 6 näher dargestellt.

Figur 5 zeigt schematisch in einer Draufsicht einen Ausschnitt einer Kanalstruktur 6 mit einem durchströmenden Solarfluid 9. Die unterschiedliche Verteilung des Solarfluids ist durch die Intensität der Schraffur in einer dunkleren Farbe dargestellt. In Figur 5 wird das Solarfluid entlang eines Eingangskanalabschnitts 7, welcher vor den Ausgangskanalabschnitten 8 mittels eines Krümmers 12 umgelenkt wird, auf ein Leitelement 2 geleitet, welches als eine Art Prallplatte ausgebildet ist. Von dieser Prallplatte aus verzweigt das Solarfluid symmetrisch in die beiden Ausgangskanalabschnitte 8. Dargestellt ist insbesondere der Einfluss der Strömungsgeschwindigkeit und der Kanalbreiten auf die gleichmäßige Verteilung des Fluidflusses an verschiedenen Verzweigungspunkten. Nur ein abgestimmtes Verhältnis von Kanalbreite, Kanallänge und Flussgeschwindigkeit bedingt ein symmetrisches Aufteilen des Fluidflusses. Besonders relevant ist hierbei die Länge des mit 13 gekennzeichneten, dem Krümmer 12 nachfolgenden, bevorzugt geraden Bereiches. Bei einer Veränderung eines Parameters erhält man unterschiedliche Strömungsbilder, wie dies in Figur 6 dargestellt ist.

Figur 6 zeigt schematisch in einer Draufsicht einen Ausschnitt einer zweiten Ausführungsform einer Kanalstruktur 6 mit einem durchströmenden Solarfluid 9. Der Ausschnitt entspricht im Wesentlichen der Ausführungsform nach Figur 5, jedoch ist in dem vorliegenden Beispiel die Kanalbreite größer gewählt als in Figur 5. Anhand der eingezeichneten Durchflussströmung lässt sich erkennen, dass mit der Verbreiterung des Kanals die Tendenz zur Ablösung des Flusses von der Kanalwandung deutlich vergrößert ist, wie dies zum Beispiel in dem mit 14 gekennzeichneten Bereich deutlich zu erkennen ist. Durch die Ablösung an der Wand erfolgt eine unsymmetrische Verteilung des Solarflusses, wie dies an dem mit 15 bezeichneten Bereich zu erkennen ist, bei dem das Solarfluid etwas rechtssymmetrisch aus der Eingangskanalabschnitt 7 heraustritt, sodass der rechte Ausgangskanalabschnitt 8a eine größere Menge an Solarfluid aufweist gegenüber dem anderen Ausgangskanalabschnitt 8.

Figur 7 zeigt schematisch in einer Draufsicht ein weiteres Ausführungsbeispiel einer Kanalstruktur 6. Das Ausführungsbeispiel nach Figur 7 unterscheidet sich hauptsächlich darin, dass Aussparungen 16 zur Reduktion des Materialverbrauchs und zu unterschiedlichen Gestaltung des Strömungsverlaufs des Fluids vorgesehen sind. Hierdurch ist der Strömungsverlauf des Solarfluids 9 etwas unterschiedlich zu den vorherigen Strömungsfluidverläufen, wobei in Figur 7 insbesondere eine Längenoptimierung stattgefunden hat. Die Aussparungen 16 ermöglichen eine verbesserte Umlenkung des Solarfluids 9 an den Ausgangskanalabschnitten 8. Dadurch ist es möglich, ohne die Gefahr einer in Fig. 6 schematisch dargestellten einseitigen Ablösung des Solarfluids 9 einen auf den Krümmer 12 und/oder gekrümmte Abschnitte 12 nachfolgenden geraden Bereich in entsprechender Länge auszubilden bzw. platzsparend in der gesamten Kanalstruktur 6 anzuordnen.

## Patentansprüche

1. Absorbereinrichtung (1) für einen Solarkollektor, umfassend ein von einem Solarfluid durchströmbares Fluidverteilungssystem,
**dadurch gekennzeichnet, dass** das Fluidverteilungssystem eine als Strömungsfeld ausgebildete Kanalstruktur (6) mit strömungstechnischen Mitteln (2,5) zur Fluidhomogenisierung aufweist, sodass im Wesentlichen unabhängig von einem Eingangsfluidstrom eine gleichmäßige Verteilung des Fluidstroms in dem Solarkollektor gewährleistet ist.

2. Absorbereinrichtung (1) nach Anspruch 1,
**dadurch gekennzeichnet, dass** die Kanalstruktur (6) eine Kaskadenstruktur aufweist, bei dem die strömungstechnischen Mittel als von einem Eingangskanalabschnitt (7) abzweigende Kanalverzweigungen mit mehreren Ausgangskanalabschnitten (8), insbesondere zwei Ausgangskanalabschnitten (8) ausgebildet sind.

3. Absorbereinrichtung (1) nach Anspruch 2,
**dadurch gekennzeichnet, dass** in der Kanalstruktur (6) mehrere strömungstechnische Mittel ausgebildet sind, wobei die Ausgangskanalabschnitte (8) die Eingangskanalabschnitte (7) für ein nachfolgendes strömungstechnisches Mittel bilden, sodass eine mehrfache Kanalverzweigung ausgebildet ist.

4. Absorbereinrichtung (1) nach einem der vorherigen Ansprüche 1 bis 3,
**dadurch gekennzeichnet, dass** ein Strömungsquerschnitt der Kanalabschnitte (7,8) stromabwärts abnimmt, wobei vorzugsweise ein Gesamtströmungsquerschnitt im Wesentlichen konstant bleibt.

5. Absorbereinrichtung (1) nach einem der vorherigen Ansprüche 1 bis 4,
**dadurch gekennzeichnet, dass** die Kanalabschnitte (3) eines strömungstechnischen Mittels mit benachbarten Kanalabschnitten (3) eines anderen strömungstechnischen Mittels verbunden sind, sodass ein Druckausgleich zwischen den entsprechenden Kanalabschnitten (3) realisierbar ist.

6. Absorbereinrichtung (1) nach einem der vorherigen Ansprüche 1 bis 5,
**dadurch gekennzeichnet, dass** die strömungstechnischen Mittel zur Ausbildung von Kanalabschnitten (3) Leitelemente (2) wie Kanalwandungen, Leitflächen und dergleichen umfassen, mit denen das durchströmbare Solarfluid leitbar ist.

7. Absorbereinrichtung (1) nach einem der vorherigen Ansprüche 1 bis 6,
**dadurch gekennzeichnet, dass** die strömungstechnischen Mittel zur Ausbildung von Kanalabschnitten (3) Umströmungselemente (5) wie Säulen, Zapfen, Tropfen, Noppen, Erhebungen, Vertiefungen und dergleichen umfassen, die von dem Solarfluid umströmbar sind.

8. Absorbereinrichtung (1) nach einem der vorherigen Ansprüche 1 bis 7,
**dadurch gekennzeichnet, dass** die Kanalabschnitte (3) mittels zwei parallel beabstandeten Plattenelementen (4) und dazwischen angeordneten, zumindest eines der Plattenelemente (4) kontaktierenden, strömungstechnischen Mitteln ausgebildet ist.

9. Absorbereinrichtung (1) nach einem der vorherigen Ansprüche 1 bis 8,
**dadurch gekennzeichnet, dass** die Absorbereinrichtung (1) als Kunststoffabsorbereinrichtung ausgebildet ist.

10. Solarkollektor, insbesondere ein vollflächig durchströmbarer Solarkollektor, mit einer Absorbereinrichtung (1),
**dadurch gekennzeichnet, dass** die Absorbereinrichtung (1) nach einem der vorherigen Ansprüche 1 bis 9 ausgebildet ist.
